# EUROPEAN PATENT APPLICATION

(11) **EP 1 180 849 A2**
(43) Date of publication of application: **20.02.2002**
(21) Application number: 01118982.6
(22) Date of filing: 06.08.2001
(51) Int. Cl.: H02P 6/00

(54) **Drive circuit of brushless motor**

(30) Priority: 11.08.2000 JP 2000244114
(71) Applicant: TGK Co., Ltd., Tokyo 193-0942 (JP)
(72) Inventor: Nakatukasa, Hirotaka, Hachioji-shi, Tokyo 193-0942 (JP)
(74) Representative: Grünecker, Kinkeldey, Stockmair & Schwanhäusser Anwaltssozietät

(57) **Abstract**

A drive circuit of a brushless motor including a search coil L1 and a drive coil L2 comprises a Schmitt trigger circuit formed by a first operational amplifier OP1 which detects rotation of the motor by the search coil L1, and an oscillator circuit formed by a second operational amplifier OP2 which functions as an inverter during rotation or as a rotation stoppage signal-delivering section during stoppage of the motor. The drive coil L2 alternately is driven by the first operational amplifier OP1 and the second operational amplifier OP2. In case of a stoppage of the motor the second operational amplifier OP2 delivers an oscillating signal to the outside.

## Description

This invention relates to a drive circuit of a brushless motor according to the preamble part of claim 1.

Such a brushless motor is used as a fan motor of an air-conditioning unit for an automotive vehicle, for sampling the compartment temperature by sucking air at a predetermined location within a compartment of the vehicle (in-car sensor).

The air-conditioning unit uses the sampled temperature information to carry out a temperature adjustment until the temperature within the compartment becomes equal to a preset temperature. The in-car sensor comprises a thermistor and an aspirator. The aspirator uses the motor driven fan for sucking air from the compartment and guiding the air to the thermistor. The motor used has to be quiet since a port of the aspirator is arranged at a location near the head of an occupant. Therefore, a brushless motor usually is used.

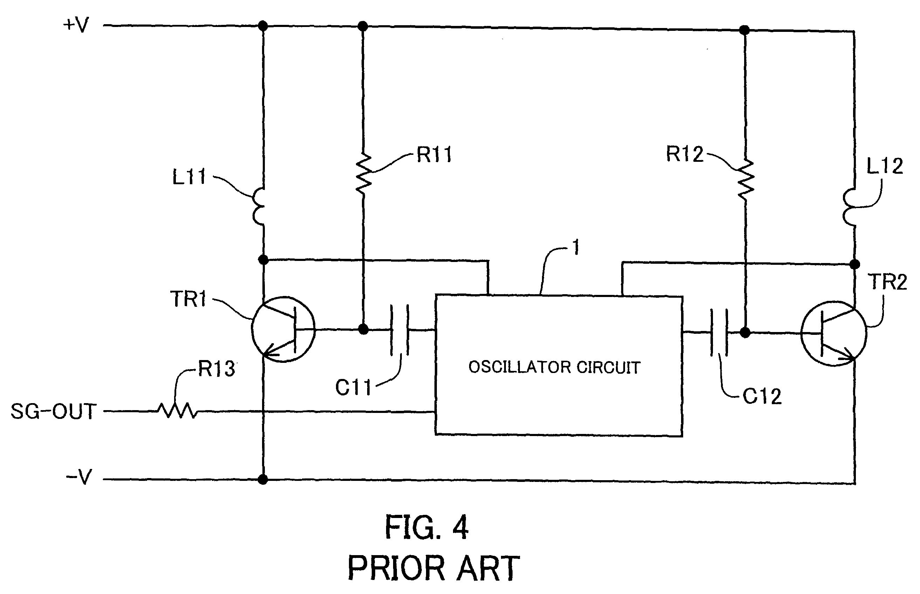

FIG. 4 is a circuit diagram showing an example of a drive circuit of a conventional brushless motor.

A conventional drive circuit (Fig. 4) of a brushless motor includes two drive coils L11, L12 wound in respective opposite directions in an alternating manner, two transistors TR1, TR2, resistances R11, R12, capacitors C11, C12 forming an astable multivibrator circuit, and an oscillator circuit 1. The drive coils L11, L12 are connected to collectors of the transistors TR1, TR2. The collectors of the transistors TR1, TR2 and the capacitors C11, C12 are crosswise connected within the oscillator circuit 1. The oscillator circuit 1 monitors a back electromotive force (braking torque or reverse force) developed in the drive coils L11, L12 in response to the operation of the transistors R1, R2 and the capacitors C11, C12, and starts to oscillate at a predetermined frequency when stoppage of the motor is detected. Then the oscillator circuit 1 supplies its oscillating output via a resistance R13 to an external output terminal SG-OUT.

The powered transistors TR1, TR2 repeatedly carry out on/off operations at an oscillation frequency determined by a time constant of the resistances R11, R12 and the capacitors C11, C12, such that electricity flows through the drive coils L11, L12. The motor continuously rotates in a certain direction. During normal motor rotation, the oscillation is carried out at a shorter repetition period than a repetition period of a oscillation frequency for rotation of the motor determined by a time constant of the resistance R11 and the capacitor C11. As soon as the back electromotive force is detected due to a locked state of the motor caused by any reason, the oscillator circuit 1 carries out self-oscillation at a predetermined frequency determined by the time constant of the resistance R11 and the capacitor C11, and delivers the oscillating output signal to an external circuit via the external output terminal SG-OUT The known drive circuit is complicated in circuit configuration and suffers from the problem that the oscillation frequency is not stable due to susceptibility to changes in temperature..

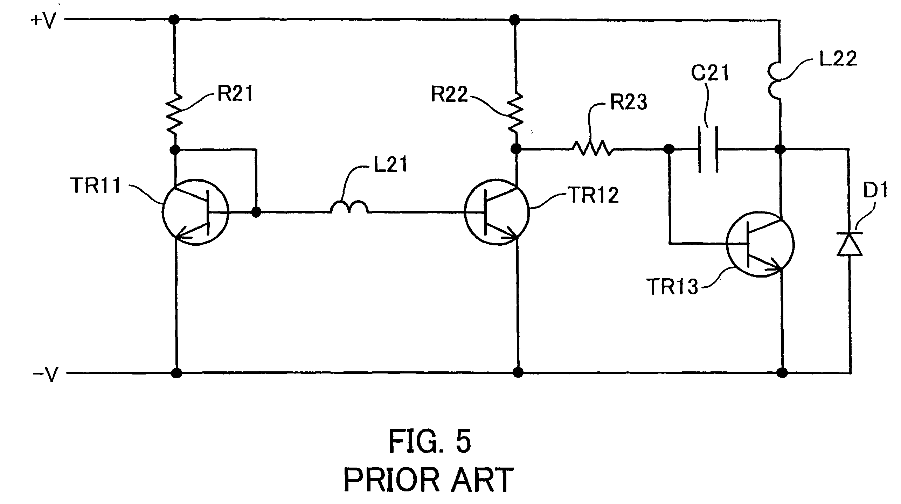

Another conventional drive circuit (Fig. 5) of a brushless motor having a rotor with at least one magnet includes a search coil L21 for detecting rotation, a drive coil L22 for driving the motor for rotation, transistors TR11 to TR13, resistances R21 to R23, a capacitor C21, and a diode D1. Search coil L21 is connected to the bases of the transistors TR11, TR12 in current mirror circuit configuration, and detects a voltage induced by the motion of the magnet of the rotor. The transistor TR13 turns on when electric current is supplied to its base via the resistances R22, R23 to drive the drive coil L22, and turns off when the supply of electric current via the resistance R23 is cut off by a turn-on operation of the transistor TR12 caused by the electromotive force detected by the search coil L21. Thus, the on/off operations of the drive coil L22 caused by the transistor TR13 generates a drive torque to thereby drive the motor for rotation. The known drive circuit is simpler in circuit configuration than the other and shows acceptable temperature characteristics. However, it is unable to notify the stoppage of the motor to the outside. When the motor is stopped by any reason during operation the stoppage is not registered. The air-conditioning unit then adjusts a wrong compartment temperature.

It is a task of the invention to provide a brushless motor drive circuit of simple construction and which is able to detect and notify a motor stoppage, preferably for an in-car sensor of an automobile air-conditioning unit.

Said task is solved by a drive circuit according to the features of claims 1.

In the drive circuit the second operational amplifier performs a double function as it additionally operates as a detector for a rotation stoppage and notifies the motor stoppage of the motor to the outside. The drive circuit is of simple construction but outputs a signal indicative of a motor stoppage.

The drive circuit of the brushless motor includes a Schmitt trigger circuit formed by the first operational amplifier and an oscillator circuit formed by the second operational amplifier. The input of the first operational amplifier OP1 receives a rotation detection signal generated by the search coil L1 indicative of rotation of a rotor portion. The opposite ends of the drive coil are connected to the outputs of the first and second operational amplifier. During rotation of the rotor, in response to the rotation detection signal, the drive coil L2 alternately is driven by the first operational amplifier OP1 and the second operational amplifier OP2 acting as an inverter. During stoppage of the rotor portion, the oscillator circuit formed by the second operational amplifier delivers a signal indicative of the stoppage to the outside. The brushless motor including the search coil and the drive coil only needs a simple construction using two operational amplifiers. The drive circuit detects stoppage of the motor, by causing the second operational amplifier to function as the oscillator circuit when the rotor portion stops. The use of the operational amplifiers leads to a very stable oscillation frequency.

An embodiment of the invention will be described with reference to the drawings. In the drawings is:
- Fig. 1: a circuit diagram showing a drive circuit of a brushless motor, according to the invention,
- Fig. 2: a diagram showing waveforms at essential parts of the drive circuit during rotational operation of the brushless motor of Fig. 1,
- Fig. 3: a diagram showing waveforms at essential parts of the drive circuit during stoppage of rotation of the brushless motor of Fig. 1,
- Fig. 4: a circuit diagram showing an example of a conventional drive circuit of a brushless motor (prior art), and
- Fig. 5: a circuit diagram showing another example of a conventional drive circuit of a brushless motor (prior art).

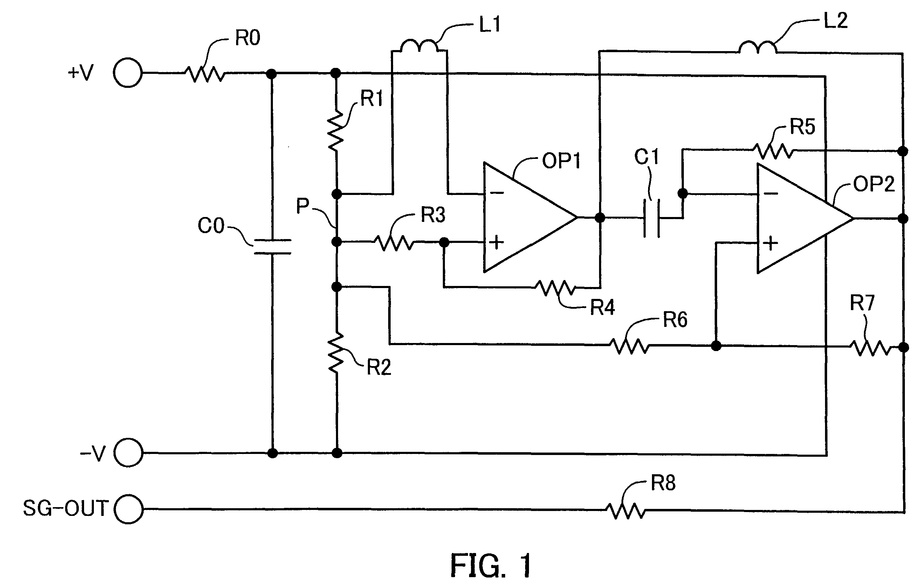

A drive circuit (Fig. 1) of a not shown brushless motor having a rotor equipped with at least one magnet, comprises a Schmitt trigger circuit formed by a first operational amplifier OP1 and an oscillator circuit formed by a second operational amplifier OP2. The first and second operational amplifiers OP 1, OP2 are implemented by an integrated circuit having a dual configuration in which the two operational amplifiers OP1, OP2 for high-current drive are incorporated in a single package. A search coil L1 is arranged adjacent to a drive coil L2 wound around a not shown yoke. The search coil L1 detects changes in magnetic flux caused by the rotation of the magnet driven by the drive coil L2 to monitor the rotation of the rotor portion of the motor.

The drive circuit has power supply terminals +V, -V connected to a filter formed by a resistance R0 and a capacitor C0. This filter absorbs surge voltage superposed on the power source line and high-frequency noise. The opposite ends of the capacitor C0 are connected to respective two resistances R1, R2 which are connected in series. Both resistances R1, R2 have the same resistance values. A junction between them represents a neutral voltage point P providing a neutral voltage to the drive circuit for operating the first and second operational amplifiers OP1, OP2. The neutral voltage point P is connected via the search coil L1 to an inverting input (-) and via a resistance R3 to a non-inverting input (+) of the first operational amplifier OP1. A resistance R4 is connected between the non-inverting input (-) and an output of the first operational amplifier OP1. The output of the first operational amplifier OP1 is connected via the capacitor C1 to an inverting input (-) of the second operational amplifier OP2. A resistance R5 is connected between the inverting input (-) and an output of the second operational amplifier OP2.

The second operational amplifier OP2 has its non-inverting input (+)connected via a resistance R6 to the neutral voltage point P between the resistances R1, R2, and via a resistance R7 to the output of the second operational amplifier OP2. The drive coil L2 is connected between the output of the first operational amplifier OP1 and the output of the second operational amplifier OP2. The output of the second operational amplifier OP2 is connected via a resistance R8 to an external output terminal SG-OUT.

The non-inverting input (+) of the first operational amplifier OP1 inputs a reference voltage for detecting a voltage induced by the search coil L1. The reference voltage can assume two values +Uth, -Uth depending from the output of the first operational amplifier OP1 (a Schmitt trigger circuit having a hysteresis). Assuming that the voltage at neutral voltage point P is 0, and the voltage at the output of the first operational amplifier OP1 is a high level voltage Voh, the reference voltage Uth is calculated by:$\text{+Uth = Voh x R3/(R3 + R4)}$

When the voltage at the output of the first operational amplifier OP1 is a low level voltage Vol, the reference voltage Uth is calculated by;$\text{-Uth = Vol x R3/(R3 + R4)}$

That is, the first operational amplifier OP1 forms a Schmitt trigger circuit which has its output inverted when the voltage of the search coil L1 is equal to ± Uth.

The second operational amplifier OP2 outputs an output signal having a predetermined frequency when the rotation of the motor is stopped. With the capacitor C1 and a resistance R5 it is forming a CR oscillator circuit. The oscillation frequency is determined by a time constant of the capacitor C1 and the resistance R5, and a resistance ratio of the resistances R6 and R7. It is set to a value sufficiently lower than a frequency at which the drive coil L2 is driven during normal rotation of the motor. That is, the oscillation frequency of the second operational amplifier OP2 is set to such a frequency that the repetition period of the oscillation frequency of the second operational amplifier OP2 is longer than a time period required for the magnet rotor to perform rotation through an amount corresponding to one pole by switching of magnetic poles. Thereby it is ensured that the motor can be positively started after it is recovered from a rotation-inhibited state.

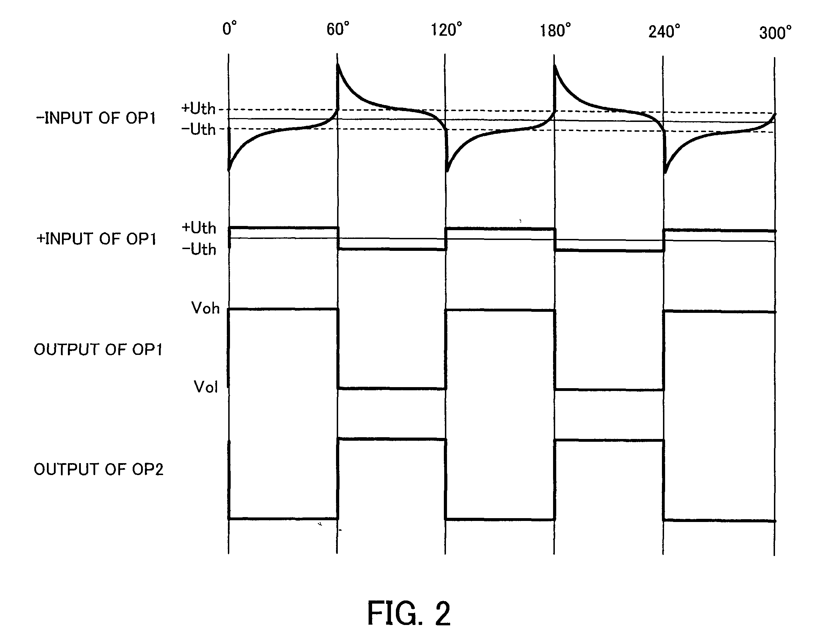

FIG. 2 shows waveforms at essential parts of the drive circuit during rotation of the motor. As an example the brushless motor has a rotor magnet in six-pole configuration, A switching of magnetic poles occurs whenever the magnet rotor rotates through 60 degrees.

During rotation of the motor, the signal inputted to the non-inverting input (+) of the first operational amplifier OP1 is a voltage induced in the search coil L1. Said voltage shows a waveform representative of a combination of voltage by changes in magnetic flux caused by the rotation of the rotor magnet and induced voltage caused by the back electromotive force of the drive coil L2.

The reference voltage ±Uth is inputted to the inverting input (-) of the first operational amplifier OP1. The output from the first operational amplifier OP1 changes its output state when the induced voltage in the search coil L1 exceeds the reference voltages ± Uth.

The second operational amplifier OP2 acts as an inverter combined with capacitor C1, to invert the signal from the first operational amplifier OP1. The drive coil L2 is supplied with power between the outputs of the first and second operational amplifiers OP1, OP2 when the magnetic poles of the rotor magnet switch. At this time, the output signal of the second operational amplifier OP2 is available via the resistance R8 at the external output terminal SG-OUT. The output signal during motor rotation e.g. has a frequency of about 150 Hz.

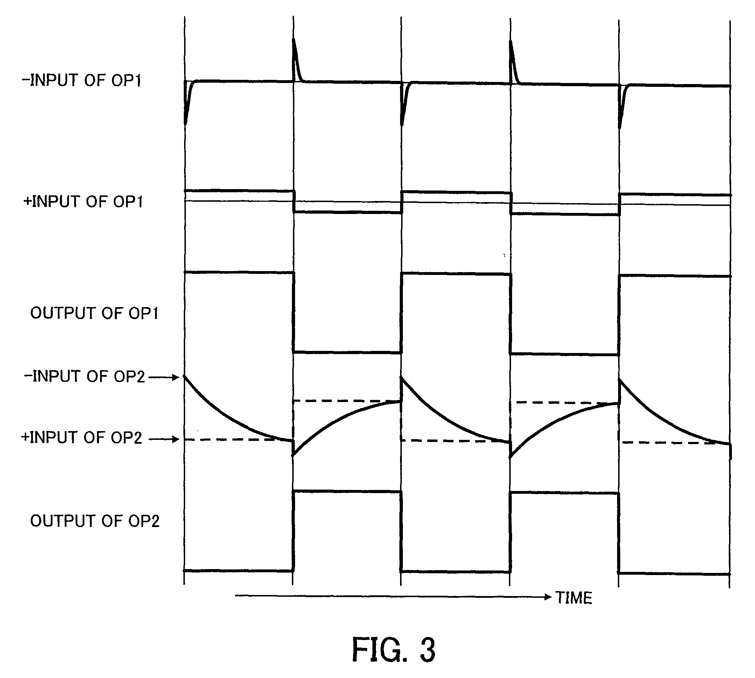

FIG. 3 shows waveforms at essential parts of the drive circuit during motor stoppage.

When the driven brushless motor is stopped, the output from the first operational amplifier OP1 becomes fixed at a high or low level. The charge or discharge of the capacitor C1 connected to the non-inverting input (+) of the second operational amplifier OP2 is started. The output from the second operational amplifier OP2 is inverted as soon as the potential of the capacitor C1 increasingly or decreasing crosses with the reference voltage supplied to the inverting input (-) of the second operational amplifier OP2 This results in cutting off the drive current for the drive coil L2 or in supplying the drive current to the drive coil L2. At this time, only the back electromotive force generated in the drive coil L2 is detected by the search coil L1.
The signal detected by the search coil L1 is inputted to the inverting input (-) of the first operational amplifier OP1. The induced voltage caused by the back electromotive force of the drive coil L2 has a peak waveform. As soon as this peak waveform is detected, the first operational amplifier OP1 changes its output status.

This causes the output of the first operational amplifier OP1 to be fixed at a low level or high level. The discharge or charge of the capacitor C1 connected to the non-inverting input (+) of the second operational amplifier Op2 is started. The output from the second operation amplifier OP2 is inverted when the potential of the capacitor C1 decreasingly or increasing crosses with the reference voltage supplied to the inverting input (-) of the second operational amplifier OP2. This results in supplying the drive current to the drive coil L2 or in cutting off the drive current for the drive coil L2.

Thus, the second operational amplifier OP2 repeatedly carries out on/off operations at the predetermined frequency determined by the capacitor C1 and the resistances R5, R6, R7. This on/off operations causes the motor to be alternately driven in normal and reverse directions, whereby the motor attempts to rotate by its own force. Therefore, since the repetition period of on/off operation is required to be set to be longer than a time period required for the rotor portion of the magnet to rotate from one pole to a next pole, i.e. for the six pole rotor portion to rotate through 60 degrees or more, the oscillator circuit formed by the second operational amplifier OP2 is configured such that it oscillates at a predetermined frequency in a range of 5Hz to 10 Hz. The output signal from the second operational amplifier OP2 delivered via the resistance R8 is available at the external output terminal SG-OUT as an alarm signal indicative of a detected motor stoppage, e.g. caused by a foreign object jamming the fan.

After the foreign object is removed to recover the motor from the locked status of the fan, or after the power is turned on to start the motor, the drive circuit performs as follows: . During motor stoppage the drive current alternately flows through the drive coil L2 at a repetition period of the on/off operations of the second operational amplifier OP2. After recovery from the locked status, the drive current drives the motor for clockwise or counterclockwise rotation. If a first tried driving operation should fail after the recovery from the locked status, then at least one further next driving operation for a rotation in the opposite sense is initiated. If the rotor portion of the magnet starts rotation and a switching of magnetic poles takes place before the next driving operation in the opposite direction is initiated, the rotational movement of the rotor is accelerated by this next driving operation. Thereafter, in a manner following the description given for the operation during normal rotation of the motor, the rotational speed of the motor increases to a speed value which is balanced with the back electromotive force of the drive coil L2 and the braking torque generated by attraction of the yoke. Finally, the motor is stabilized at a constant rotational speed.

## Claims

1. A drive circuit of a brushless motor, particularly for an in-car sensor, including a drive coil (L2) for driving a rotor portion having a magnet, and a search coil (L1) for detecting rotation of said rotor, **characterized by**
a first operational amplifier (OP1) forming a Schmitt trigger circuit performing an on/off operation based on a rotation detection signal generated by said search coil (L1), said first operation amplifier (OP1) having an output connected to one end of said drive coil (L2); and
a second operational amplifier (OP2), an output of which is connected to another end of said drive coil (L2) and to an output terminal (SG-OUT) to an external circuit, said second operational amplifier (OP2) forming an oscillator circuit performing inversion in synchronism with the on/off operation of said first operational amplifier (OP1), said oscillator circuit oscillating at a predetermined frequency when said first operational amplifier (OP1) does not perform on/off operations.

2. A drive circuit as in claim 1, **characterized in that**
Said first operational amplifier (OP1) has an inverting input (-) connected to one end of said search coil (L1), another end of which is connected to a neutral voltage point (P) equally dividing a voltage of a power supply (+ V, - V) by a first resistance (R1) and a second resistance (R2), that a non-inverting input (+) of said first operational amplifier (OP1) is connected to a common junction of a third resistance (R3) and a fourth resistance (R4) which resistances (R3, R4) are connected in series between said neutral voltage point (P) and the output of said first operational amplifier (OP1) such that a reference voltage (Uth) is provided to said Schmitt trigger circuit, and that said second operational amplifier has an inverting input (-) connected to one end of a capacitor (C1) and to one end of a fifth resistance (R5) another end of which is connected to the output of said second operational amplifier (OP2) forming together with said capacitor (C1) a time constant circuit of said oscillator circuit, the other end of said capacitor (C1) being connected to the output of said first operational amplifier (OP1), and a non-inverting input (+) of said second operational amplifier (OP2) being connected to a common junction of a sixth resistance (R6) and the seventh resistance (R7) which are connected in series between said neutral voltage point (P) and the output of said second operational amplifier (OP2) such that a reference voltage (Uth) is provided to said oscillator circuit.

3. A drive circuit as in claim 1, **characterized in that**
the oscillator circuit formed by said second operational amplifier (OP2) has an oscillator frequency whose repetition period is set to be longer than a time period required for the rotor portion of the magnet to perform rotational motion by driving the drive coil (L2) by one oscillating output, at least until said rotor portion carries out a switching step of magnetic poles.

4. A drive circuit as in claim 1, **characterized in that**
said brushless motor is a fan motor for an aspirator, preferably of a in-car sensor of an automobile air-conditioning unit.
